# EUROPEAN PATENT APPLICATION

(11) **EP 0 833 481 A1**
(43) Date of publication of application: **01.04.1998**
(21) Application number: 97850128.6
(22) Date of filing: 05.09.1997
(51) Int. Cl.: H04L 25/49

(54) **Communications system employing quantisation-level-sampling modem**

(30) Priority: 27.09.1996 SE 9603532
(71) Applicant: TELIA AB, 123 86 Farsta (SE)
(72) Inventor: Krampell, Magnus, 226 54 Lund (SE)
(74) Representative: Karlsson, Berne

(57) **Abstract**

A modem capable of transmitting data at a rate substantially greater than 28.8kb/s over a telephone network can be constructed by arranging for the modem output to be a series of analogue voltage levels which convert to a PCM data stream identical to the incoming data stream.

A data transmission system using the present invention, includes a first modem and a second modem and a telephone network having a PCM telephone transmission link. Each modem includes:
- combining means adapted to combine an incoming data stream into bytes; and
- a digital to analogue convertor adapted to convert said bytes into a series of analogue voltage levels.

The series of analogue voltage levels can be transmitted over an analogue transmission link to a PCM analogue to digital convertor, which may be located in a telephone exchange. The data transmission system is so arranged that a PCM output signal from said PCM analogue to digital convertor substantially replicates said incoming data stream.

## Description

The present invention relates to a system, method and apparatus for the transmission of data over a telephone network.

Today's modems can transmit data over a telephone network at data rates up to 28.8 kb/s. The available bandwidth for the transmission of data over a 300 to 3,400Hz telephone line is, according to Shannon's theorem, about 30kb/s. However, digital telephony systems sample and compress analogue speech signals into 64kb/s data streams for transfer across the telephone network. It should be noted that the 30kb/s limit is imposed because data transmitted by means of a modem is converted to an analogue signal representing the data and having an imposed bandwidth of 300 to 3,400 Hz, rather than any inherent bandwidth limitation imposed by the data transfer process per se.

Known data modems operate in accordance with a range of CCITT standards, ranging from V21 devices operating at 200 bauds, through to V42 devices running at 19.2kb/s and V.fast operating at 28.8kb/s. These modems use a range of modulation techniques, ranging from two-tone frequency shift keying to variants of phase shift keying, differential phase shift keying and multi-level quadrature amplitude modulation. With all these modulation techniques, the data is modulated onto an analogue carrier signal which is subsequently processed by the telephone network in exactly the same way as a speech analogue signal. This may include sampling, compression and quantisation into a PCM data steam. It is conversion to a PCM data stream, together with analogue bandwidth filtering, that imposes the 30kb/s data rate limit referred to above.

Clearly, it would be advantageous to transmit data at the higher rate of 64kb/s.

It should be noted that the digital transmission of speech over telephone systems has been used for many years. In fact the theory of PCM (pulse code modulation) was originally proposed more than 60 years ago. The need for high speed data transfer over telephone networks is a long standing technical objective.

It is an object of the present invention to provide a modem capable of transmitting data at a rate substantially greater than 28.8kb/s over a telephone network.

It is a further object of the present invention to provide a method for the transmission of data at a rate substantially greater than 28.8kb/s over a telephone network.

It is a yet further object of the present invention to provide a data transmission system including at least two modems and a telephone network adapted to transmit data at a rate substantially greater than 28.8kb/s over the telephone network.

According to a first aspect of the present invention, there is provided a data transmission system, including at least a first modem and a second modem and a telephone network having a PCM telephone transmission link, characterised in that said first modem includes:
- combining means adapted to combine an incoming data stream into bytes; and
- a digital to analogue convertor adapted to convert said bytes into a series of analogue voltage levels;
an analogue transmission link adapted to transmit said series of analogue voltage levels to a PCM analogue to digital convertor, the data transmission system so arranged that a PCM output signal from said PCM analogue to digital convertor substantially replicates said incoming data stream.

Data may be transmitted over said data transmission system at a data rate equal to the PCM data rate for the PCM telephone transmission link.

Said PCM telephone transmission link may sample incoming analogue signals at a rate substantially equal to 8,000 samples per second and said series of analogue voltage levels may be synchronised with said PCM sample rate.

Each of said bytes may comprise 8 bits.

A PCM signal, representing a data stream, received by a PCM digital to analogue convertor, may be transformed into an analogue signal in which a series of voltage levels in said analogue signal represent data bytes and, said analogue signal may be transmitted over an analogue transmission path to said second modem.

Said second modem may include:
- an analogue to digital convertor adapted to convert voltage levels into a series of bytes; and
- assembly means adapted to assemble said series of bytes into a data stream comprising a stream of bits.

Said first modem may include compensation means adapted to adjust said series of voltage levels to compensate for attenuation in any analogue transmission path between said first and second modems.

Said compensation means may include means for transmitting a predetermined training sequence to said second modem and said second modem may include means for comparing a received training sequence with a stored data sequence corresponding to said training sequence, means for calculating a compensation factor and means for transmitting said compensation factor to said first modem.

Said predetermined training sequence may be transmitted as part of a handshake procedure between said first and second modems.

Said PCM telephone transmission link operates according to the A-law.

According to a second aspect of the present invention, there is provided a method of transmitting data over a data transmission path, including at least one PCM telephone transmission link, characterised by:
- combining an incoming data stream into bytes;
- converting said bytes into a series of analogue voltage levels; and
- transmitting said series of analogue voltage levels over an analogue transmission path to a PCM analogue to digital convertor;
said PCM analogue to digital convertor producing an output signal which substantially replicates said incoming data stream.

Said data stream may be transmitted at a data rate equal to the PCM data rate for the PCM telephone transmission link.

Said PCM telephone transmission link may sample incoming analogue signals at a rate substantially equal to 8,000 samples per second and said series of analogue voltage levels may be synchronised with said PCM sample rate.

Said incoming data stream may be combined into 8 bit bytes.

A PCM signal, representing a data stream, may be transformed into an analogue signal in which voltage levels in said analogue signal represent data bytes.

Said method may include the steps of:
- converting the voltage levels into bytes; and
- assembling said series of bytes into a data stream comprising a stream of bits.

Said series of voltage levels may be adjusted to compensate for attenuation in said analogue transmission paths.

A predetermined training sequence may be transmitted over said data transmission path, a received training sequence may be compare with a stored data sequence corresponding to said training sequence, and a compensation factor calculated.

Said predetermined training sequence may be transmitted as part of a handshake procedure between two modems.

Said PCM telephone transmission link may operate according to the A-law.

According to a third aspect of the present invention, there is provided a modem, adapted for use with a transmission system as claimed in any one of clams 1 to 10, or a method of transmitting data as claimed in any one of claims 11 to 20, characterised in that said modem includes:
- combining means adapted to combine an incoming data stream into bytes; and
- a digital to analogue convertor adapted to convert said bytes into a series of analogue voltage levels;
such that when said series of analogue voltage levels is input to a PCM analogue to digital convertor, a PCM output signal from said PCM analogue to digital convertor substantially replicates said incoming data stream.

Data may be modulated/demodulated at a data rate equal to the PCM data rate for the PCM telephone transmission link.

Each one of said series of analogue voltage levels may have a duration of 125µs.

Each of said bytes may comprise 8 bits.

Said modem may include:
- an analogue to digital convertor adapted to convert voltage levels into a series of bytes; and
- assembly means adapted to assemble said series of bytes into a data stream comprising a stream of bits.

Said modem may include compensation means adapted to adjust said series of voltage levels to compensate for attenuation in any analogue transmission path over which said series of analogue voltage levels is transmitted.

Said compensation means may include means for transmitting a predetermined training sequence, means for comparing a received training sequence with a stored data sequence corresponding to said training sequence, means for calculating a compensation factor and means for transmitting said compensation factor to another modem.

Said modem may be adapted to transmit said predetermined training sequence as part of a handshake procedure.

Embodiments of the invention will now be described, by way of example, with reference to the accompanying drawings, in which:
Figure 1 illustrates, schematically, the transmission of an analogue signal over a telephone network.
Figure 2 illustrates, schematically, the transformation of a digital signal into an analogue signal and its transfer to a telephony switch, in accordance with the present invention.

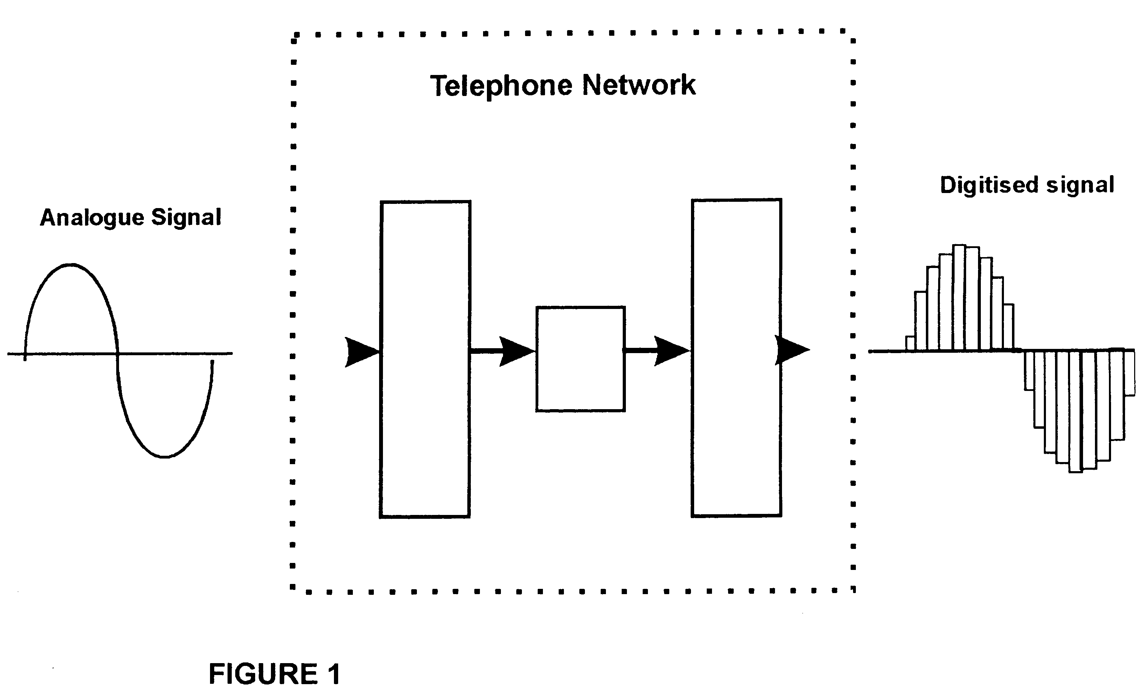

Consider first the way in which an analogue speech signal is converted to a 64kb/s PCM data stream, as illustrated in Figure 1, within a telephone network. The analogue signal is sampled at a rate of 8,000 samples per second and each sample is converted into one byte, i.e. 8 bits. This means that each sample corresponds to one of 256 discrete levels. The process of digitisation is performed by an analogue to digital convertor which includes sampling circuitry. Raw data from the analogue to digital convertor is in the form of 12 bit words which are then compressed using an A-law, or µ-law, compander to produce 8 bits. This means that the magnitudes represented by the 8 bit words used to represent a sample have a non-linear relationship to the amplitude of the analogue signal.

After transmission over the telephone network, the digital PCM signal is reconverted to an analogue signal using a digital to analogue converter and the signal decompressed using a compander. The analogue signal reproduced in this way is, within the limits imposed by analogue to digital and digital to analogue conversion, an exact replica of the original analogue speech signal.

The method of the present invention operates in the manner set out below.
1. An incoming digital signal is first divided into a stream of bytes, i.e. 8 bit digital words.
2. For each byte an analog voltage is generated having an amplitude corresponding to the contents of the byte. The precise magnitude of the voltage will depend on the companding law employed in PCM transmission over the telephone network and attenuation imposed by transmission paths while the signal is in analogue form.
3. The analog voltage is then fed to an analogue to digital convertor in sync with the 8,000 samples per second sampling rate, i.e. each voltage level representing a byte is held for 125µs.
4. The analogue to digital convertor, which may be located at a local telephone exchange, samples each voltage level exactly once. This generates a digital data flow that is in sync with the incoming digital data stream, referred to in step (1) above.

In this way a data flow of 64kb/s is generated which can pass through the telephone network as though it was a PCM data stream. The central concept of the present invention is to generate, from a data stream, an analogue signal in such a manner that when it is passed through a PCM analogue to digital convertor it will cause the original data stream to be regenerated.

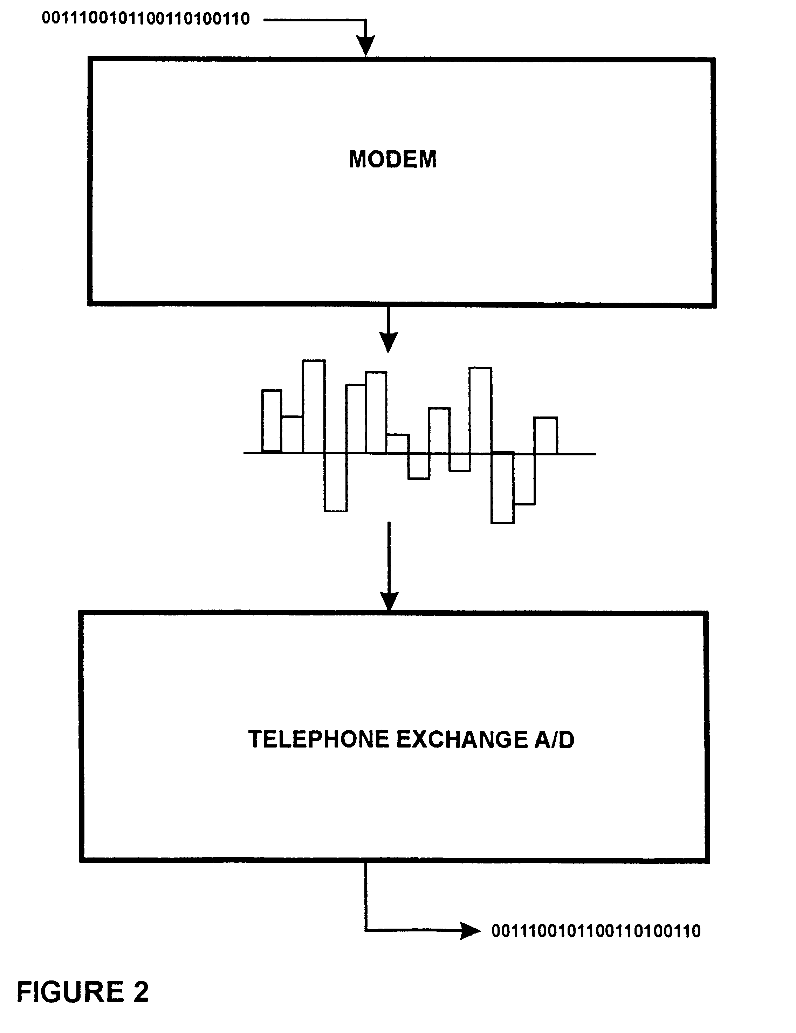

It should be noted that the point, in a telephone network, at which a speech signal is converted from analogue form to PCM may vary considerably. In some cases, the conversion may be carried out in a telephone itself, so that speech is transmitted over the entire transmission path as a digital signal, in other cases, the conversion may be performed in a local, or trunk, telephone exchange. In the present invention, data encoded, using a modem, into an analogue signal, is transferred as an analogue signal from the modem to the point at which PCM conversion is implemented. At this point the signal is reconstituted as data. This process is illustrated in Figure 2, which shows an incoming data stream being converted, by a modem, to a series of analogue voltage levels. The resultant analogue signal is then transmitted to a telephone switch which has a PCM analogue to digital convertor. The data stream emerging from the analogue to digital convertor will be seen to be identical to the incoming data stream.

For received data, the process operates in reverse. An incoming data stream is converted to an analogue signal by the PCM to analogue conversion unit in a telephone exchange and transmitted as an analogue signal to a receiving modem where it is regenerated as a digital signal.

The path over which the analogue representation of the digital signal is transmitted may introduce some attenuation of the analogue signal. The modem must compensate for this if errors are not to be introduced into the data stream. Compensation may be achieved by increasing the voltage levels transmitted by a factor determined in accordance with the known attenuation. The attenuation introduced into the analogue elements of the transmission path can be determined by modems transmitting a training sequence of data as part of the handshake procedure used to establish a data link between two modems. This allows the modems to adjust the relationship between data values in the data signal and voltage levels in the equivalent analogue signal. This level adjustment may be performed on establishment of a data link and, if necessary, at intervals during a data transmission.

In a data transmission system, employing the present invention, the data transmission path will be terminated at each end by a modem. The data transmission path may include one, or more analogue transmission links, for example, analogue transmission links connecting the modems to PCM A/D, or D/A, convertors, together with at least one PCM transmission link. The modem initiating a data call, establishes a handshake procedure with the called modem. During this handshake procedure, the first modem transmits a predetermined training sequence to the other modem. The receiving modem compares the received training sequence with a stored version of the training sequence and from this comparison calculates a factor by which the transmitted voltage levels must be increased in order to compensate for attenuation in the analogue transmission paths. This factor is then transmitted to the calling modem where it is used to adjust the voltage levels of the transmitted signal.

With prior art modems operating in a telephone network using PCM transmission, the PCM signal is a digitised version of an analogue carrier signal on to which the data signal is modulated. By way of contrast, in the system according to the present invention, the PCM signal is the actual data signal which was input to the modem.

## Claims

1. A data transmission system, including at least a first modem and a second modem and a telephone network having a PCM telephone transmission link, characterised in that said first modem includes:
- combining means adapted to combine an incoming data stream into bytes; and
- a digital to analogue convertor adapted to convert said bytes into a series of analogue voltage levels;
an analogue transmission link adapted to transmit said series of analogue voltage levels to a PCM analogue to digital convertor, the data transmission system being so arranged that a PCM output signal from said PCM analogue to digital convertor substantially replicates said incoming data stream.

2. A data transmission system, as claimed in claim 1, characterised in that data is transmitted over said data transmission system at a data rate equal to the PCM data rate for the PCM telephone transmission link.

3. A data transmission system, as claimed in either claim 1, or 2, characterised in that said PCM telephone transmission link samples incoming analogue signals at a rate substantially equal to 8,000 samples per second and in that said series of analogue voltage levels are synchronised with said PCM sample rate.

4. A data transmission system, as claimed in any previous claim, characterised in that each of said bytes comprise 8 bits.

5. A data transmission system, as claimed in any previous claim, characterised in that a PCM signal, representing a data stream, received by a PCM digital to analogue convertor, is transformed into an analogue signal in which a series of voltage levels in said analogue signal represent data bytes, and in that said analogue signal is transmitted over an analogue transmission path to said second modem.

6. A data transmission system, as claimed in claim 5, characterised in that said second modem includes:
- an analogue to digital convertor adapted to convert voltage levels into a series of bytes; and
- assembly means adapted to assemble said series of bytes into a data stream comprising a stream of bits.

7. A data transmission system, as claimed in any previous claim, characterised in that said first modem includes compensation means adapted to adjust said series of voltage levels to compensate for attenuation in any analogue transmission path between said first and second modems.

8. A data transmission system, as claimed in claim 7, characterised in that said compensation means includes means for transmitting a predetermined training sequence to said second modem and said second modem includes means for comparing a received training sequence with a stored data sequence corresponding to said training sequence, means for calculating a compensation factor and means for transmitting said compensation factor to said first modem.

9. A data transmission system, as claimed in claim 8, characterised in that said predetermined training sequence is transmitted as part of a handshake procedure between said first and second modems.

10. A data transmission system, as claimed in any previous claim, characterised in that said PCM telephone transmission link operates according to the A-law.

11. A method of transmitting data over a data transmission path, including at least one PCM telephone transmission link, characterised by:
- combining an incoming data stream into bytes;
- converting said bytes into a series of analogue voltage levels; and
- transmitting said series of analogue voltage levels over an analogue transmission path to a PCM analogue to digital convertor;
said PCM analogue to digital convertor producing an output signal which substantially replicates said incoming data stream.

12. A method, as claimed in claim 11, characterised by transmitting said data stream at a data rate equal to the PCM data rate for the PCM telephone transmission link.

13. A method, as claimed in either claim 11, or 12, characterised by said PCM telephone transmission link sampling incoming analogue signals at a rate substantially equal to 8,000 samples per second and by synchronising said series of analogue voltage levels with said PCM sample rate.

14. A method, as claimed in any of claims 11 to 13, characterised by combining said incoming data stream into 8 bit bytes.

15. A method, as claimed in any of claims 11 to 14, characterised by transforming a PCM signal, representing a data stream, into an analogue signal in which voltage levels in said analogue signal represent data bytes.

16. A method, as claimed in claim 15, characterised by:
- converting the voltage levels into bytes; and
- assembling said series of bytes into a data stream comprising a stream of bits.

17. A method, as claimed in any of claims 11 to 16, characterised by adjusting said series of voltage levels to compensate for attenuation in said analogue transmission paths.

18. A method, as claimed in claim 17, characterised by transmitting a predetermined training sequence over said data transmission path, comparing a received training sequence with a stored data sequence corresponding to said training sequence, and calculating a compensation factor.

19. A method, as claimed in claim 18, characterised by transmitting said predetermined training sequence as part of a handshake procedure between two modems.

20. A method, as claimed in any previous claim, characterised in that said PCM telephone transmission link operates according to the A-law.

21. A modem, adapted for use with a transmission system as claimed in any one of clams 1 to 10, or a method of transmitting data as claimed in any one of claims 11 to 20, characterised in that said modem includes:
- combining means adapted to combine an incoming data stream into bytes; and
- a digital to analogue convertor adapted to convert said bytes into a series of analogue voltage levels;
such that when said series of analogue voltage levels is input to a PCM analogue to digital convertor, a PCM output signal from said PCM analogue to digital convertor substantially replicates said incoming data stream.

22. A modem, as claimed in claim 21, characterised in that data is modulated/demodulated at a data rate equal to the PCM data rate for the PCM telephone transmission link.

23. A modem, as claimed in either claim 21, or 22, characterised in that each one of said series of analogue voltage levels has a duration of 125µs.

24. A modem, as claimed in any of claims 21 to 23, characterised in that each of said bytes comprise 8 bits.

25. A modem, as claimed in any of claims 21 to 24, characterised in that said modem includes:
- an analogue to digital convertor adapted to convert voltage levels into a series of bytes; and
- assembly means adapted to assemble said series of bytes into a data stream comprising a stream of bits.

26. A modem, as claimed in any of claims 21 to 25, characterised in that said modem includes compensation means adapted to adjust said series of voltage levels to compensate for attenuation in any analogue transmission path over which said series of analogue voltage levels is transmitted.

27. A modem, as claimed in claim 26, characterised in that said compensation means includes means for transmitting a predetermined training sequence, means for comparing a received training sequence with a stored data sequence corresponding to said training sequence, means for calculating a compensation factor and means for transmitting said compensation factor to another modem.

28. A modem, as claimed in claim 27, characterised in that said modem is adapted to transmit said predetermined training sequence as part of a handshake procedure.
